# EUROPEAN PATENT APPLICATION

(11) **EP 1 174 786 A2**
(43) Date of publication of application: **23.01.2002**
(21) Application number: 01306194.0
(22) Date of filing: 18.07.2001
(51) Int. Cl.: G06F 1/00, G06F 9/445

(54) **Method, system, and program for reusing software licenses with new computer hardware**

(30) Priority: 20.07.2000 US 620727
(71) Applicant: International Business Machines Corporation, Armonk, NY 10504 (US)
(72) Inventor: Dutta, Rabindranath, c/o IBM United Kingdom Ltd, Winchester, Hampshire SO21 2JN (GB)
(74) Representative: Waldner, Philip

(57) **Abstract**

Disclosed is a method, system, and program used by a computer vendor to install programs onto a purchased computer. A purchase request is received for a computer from a consumer. Consumer indication is received of at least one software program installed on an old computer owned by the consumer to install on the new computer. A determination is made as to whether a license key is needed to install each indicated software program. The license key is received from the consumer for each indicated software program requiring a license key. Each indicated software program is installed onto the new computer and, if necessary, each received license key is used to install each software program requiring the license key. Further, the computer vendor is legally authorized to install the indicated software programs onto the new computer.

## Description

### BACKGROUND OF THE INVENTION

### 1. Field of the Invention

The present invention relates to a method, system, and program for allowing a user to reuse installed software on a newly purchased computer system in accordance with the license terms of the installed software.

### 2. Description of the Related Art

When a personal computer (PC) consumer purchases a new computer from a vendor, the vendor typically installs a new operating system on the new computer, as well as any other new application programs the consumer purchases. However, one of the most substantial cost components of a new computer is the cost of adding an operating system and any additional applications.

With most applications and common operating system programs, a single user license permits the purchaser to install the operating system and application on one computer. (Note, that this single user license typically applies to situations where the PC consumer purchases the software package "off-the-shelf", or as a stand alone product. Licenses for an operating system installed on a new computer sometimes restricts the use of the operating system software to the specific purchased computer and may not permit transfer of the operating system software to other computers.). Under single end user license terms that allow the use of the software on any one computer, the PC consumer could legally purchase a computer without an installed operating system, uninstall or remove the operating system and any applications from the old computer, and then reinstall the operating system, application programs, and any necessary device drivers on the new computer. However, in practice, PC consumers typically do not purchase computer hardware without an installed operating system because of the complexity and time needed to install an operating system and all necessary device drivers, as well as any additional application programs. Thus, the complexity of the installation process acts as a barrier to consumers reducing the computer purchase price by purchasing a new computer without an installed operating system and device drivers.

The PC computer market is extremely cost competitive with very low profit margins for each PC computer. Because the operating system and other application software comprise a substantial cost component of a new computer purchase, a PC vendor that could avoid the operating system and application program cost in new PC computers would have a substantial competitive advantage in the PC computer market place. This competitive advantage would be particularly advantageous in capturing market share of both individual and corporate customers, who would choose cost savings over upgrading to a newer version of an operating system and application programs.

### SUMMARY OF THE PREFERRED EMBODIMENTS

To overcome the limitations in the prior art described above, preferred embodiments disclose a method, system, and program used by a computer vendor to install programs onto a purchased computer. A purchase request is received for a computer from a consumer. Consumer indication is received of at least one software program installed on an old computer owned by the consumer to install on the new computer. A determination is made as to whether a license key is needed to install each indicated software program. The license key is received from the consumer for each indicated software program requiring a license key. Each indicated software program is installed onto the new computer and, if necessary, each received license key is used to install each software program requiring the license key. Further, the computer vendor is legally authorized to install the indicated software programs onto the new computer.

In further embodiments, receiving indication of at least one software program to install on the new computer further comprises a vendor computer system querying the old computer over a network to determine software programs installed on the old computer. An electronic form is transmitted by the vendor computer system to a consumer browser over the network. The electronic form includes the determined software programs with selectable fields to allow the consumer to select in the electronic form determined software programs to install on the new computer. The vendor computer receives the electronic form transmitted from the consumer browser over the network. The information in the selected fields is used to determine the indicated software programs to install on the new computer.

In still further embodiments, the electronic form includes a data entry field for the consumer to enter the license key for each selected software program requiring a license key to install. In such case, receiving the license key from the consumer comprises receiving the license keys entered in the data entry field of the electronic form.

Yet further, installing each indicated software program onto the new computer further comprises a vendor computer system downloading the file directories from the old computer including each indicated software program over a network, wherein the old computer and vendor computer system are capable of communicating over the network. The vendor computer copies the downloaded file directories to the new computer to make the software programs included in the copied file directories available for use on the new computer.

Additional embodiments include a method, system, and program for installing programs onto a first computer that were previously installed on a second computer. Software programs are installed onto the first computer that were installed on the second computer. The installed software programs may require a license key to complete installation. Verification is made as to whether each software program installed on the first computer was removed from the second computer when a license for the installed software program does not permit two copies of the software program to be concurrently installed on different computers.

In further embodiments, a computer program installed on the first computer blocks access to functions of the first computer until a code is entered indicating that the second computer is verified to not include duplicate copies of software programs having the license not allowing the software program to be concurrently installed on the first computer and the second computer.

Preferred embodiments provide a method, system, and program for a computer vendor to use to allow a consumer to reuse software on the new computer being purchased to avoid the cost of installing new or updated versions of the software the consumer already has installed on an old computer. This allows the computer vendor to substantially reduce the cost of manufacturing and, hence, the price of the computer in order to capture further market share.

### BRIEF DESCRIPTION OF THE DRAWINGS

Referring now to the drawings in which like reference numbers represents corresponding parts throughout:
FIG. 1 illustrates a computing environment in accordance with preferred embodiments of the present invention;
FIG. 2 illustrates steps performed by the components in the computing environment in FIG. 1 to reuse software the installed on an old computer in a newly purchased computer in accordance with preferred embodiments of the present invention;
FIG. 3 illustrates a user interface page for a user to select software components to install on the new computer in accordance with preferred embodiments of the present invention;
FIG. 4 illustrates a computing environment in accordance with additional embodiments of the present invention;
FIG. 5 illustrates a computing environment for verifying that installed components are removed from the old computer in accordance with preferred embodiments of the present invention; and
FIG. 6 illustrates steps performed by the components in the computing environment in FIG. 5 to verify that installed software components are removed from the old computer in accordance with preferred embodiments of the present invention.

### DETAILED DESCRIPTION OF THE PREFERRED EMBODIMENTS

In the following description, reference is made to the accompanying drawings which form a part hereof, and which illustrate several embodiments of the present invention. It is understood that other embodiments may be utilized and structural and operational changes may be made without departing from the scope of the present invention.

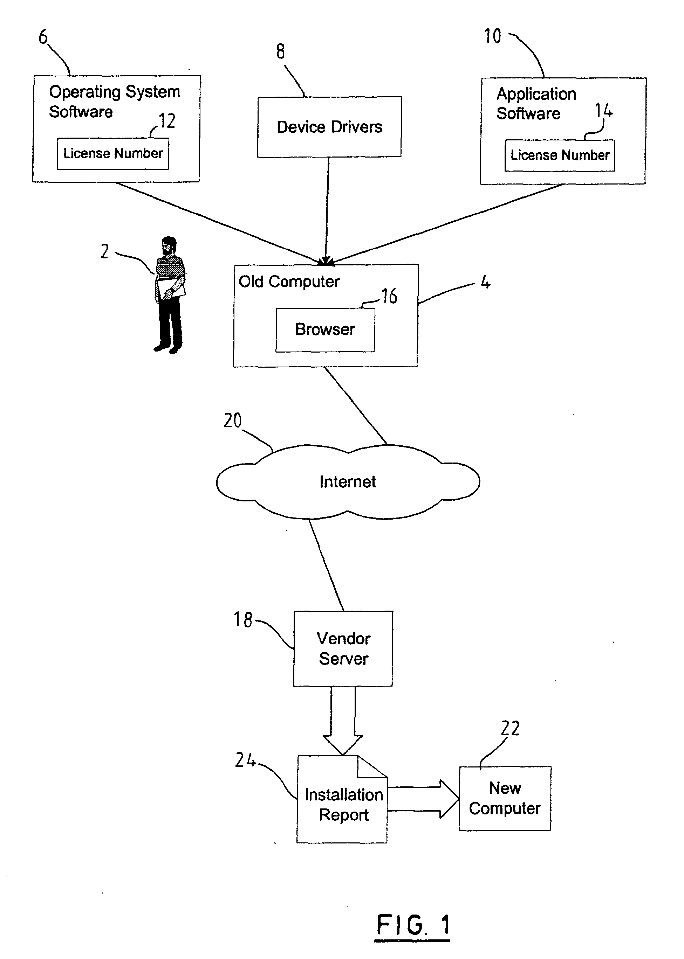

FIG. 1 illustrates one embodiment of computer components in which the preferred software installation technique is implemented. In this embodiment, a PC consumer 2 owns an old computer 4, which has an installed operating system 6, device drivers 8, and application software 10. Some of the software programs 6, 8, and 10 may require license keys 12 and 14, and others may not. Although the operating system software 6 and application software 10 are shown as requiring license numbers 12 and 14, either of these software components may not require license numbers, and certain device drivers 8 may require license numbers, even though they are shown as not requiring such licenses. The device drivers 8 comprise a layer of code to allow the operating system 6 to communicate with installed devices, e.g., modems, disk drives, display monitors, etc. The old computer 4 further includes a browser 16 that allows the PC consumer 2 to communicate with a vendor server 18 over the Internet 20, using a standard Internet protocol such as the Hypertext Transfer Protocol (HTTP).

In preferred embodiments, the vendor company, referred to as the vendor, that operates the vendor server 18 would sell a new computer 22 to the PC consumer 2 who owns the old computer 4 and is licensed to use the operating system 6, device drivers 8, and application software 10. In one implementation, the PC consumer 2 may use the browser 16 to arrange the purchase of the new computer 22 through the vendor that operates the vendor server 18. As part of the transaction for purchasing the new computer 22, the vendor server 18 may generate an installation report 24, in the manner described below, listing software programs 6, 8, and 10 to install on the new computer 22 that are installed on the old computer 4, including any license number 12 and 14 needed to complete the installation of the software programs 6, 8, 10.

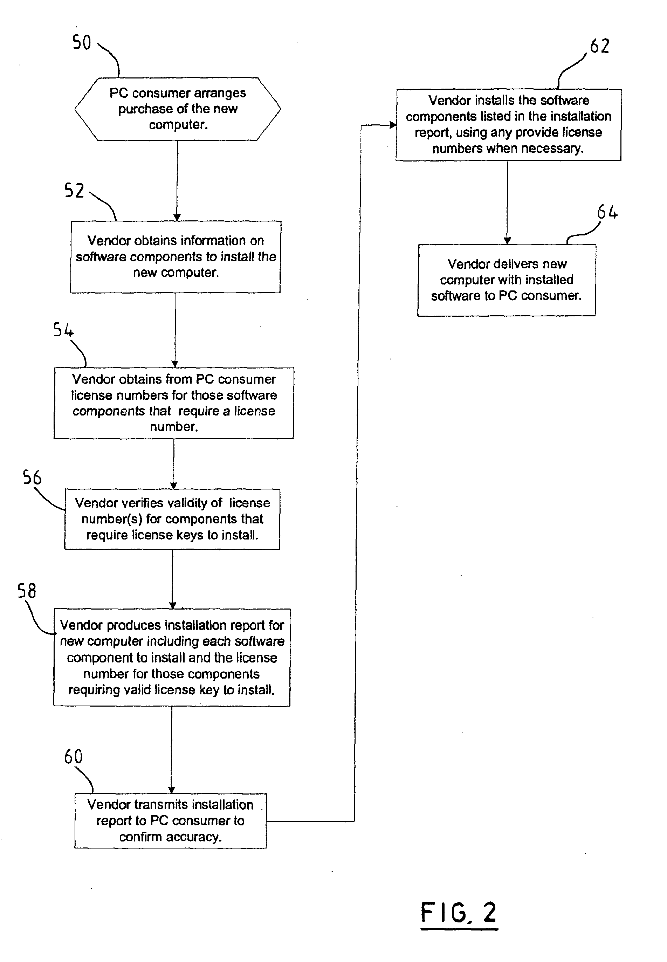

FIG. 2 illustrates preferred embodiments for the PC consumer 2 to arrange the purchase of the new computer 22 without any installed software and then have the vendor arrange the installation of the operating system 6, device drivers 8 and application software 10 on the new computer 22 pursuant to the end user licenses held by the PC consumer. The end user licenses may be for only a single user if the PC consumer 2 is a single user or multiple users if the end user licenses permit multiple users.

With respect to FIG. 2, control begins at block 50 with the PC consumer 2 ordering a new computer 22. This PC consumer 2 may use the browser 16 to execute the order on-line and provide a credit card number for a secure transaction, over a telephone, the user visiting a vendor store, etc. After the purchase is arranged, the vendor would then obtain (at block 52) information on the software components 6, 8, and 10 that the PC consumer 2 has in the old computer 4 that are to be installed on the new computer 22. Some of the software components may not have yet been installed on the old computer 4 or may be installed on another computer the PC consumer 2 uses. When obtaining information on the software components to install, the vendor would further obtain (at block 54) from the PC consumer 2 the license numbers or keys for those selected software components that require a license key to install.

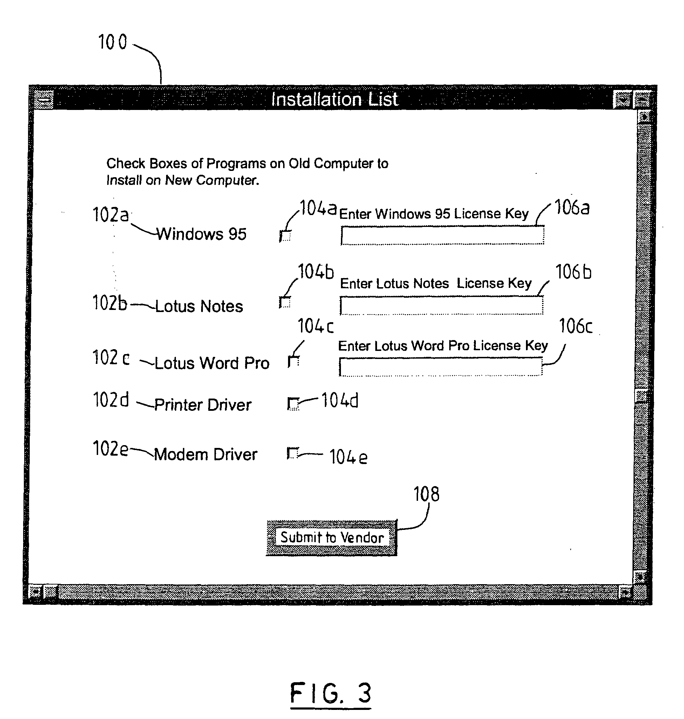

The vendor server 18 may obtain information on the installed software components 6, 8, 10 in many ways. One method may involve the vendor server 18 querying the registry file of the old computer 4 over the Internet 20 to determine all installed software components. The vendor server 18 may then generate a list in an HTML page 100 as shown in FIG. 3 of all installed components 102a, b, c, d, e with a corresponding check box 104a, b, c, d, e, and return the generated HTML page 100 to the old computer 16 browser 16. The PC consumer 2 can then use the browser 16 to select currently installed components to install on the new computer 22 by checking the check boxes 104a, b, c, d, e.

The HTML page 100 would further include entry boxes 106a, b, c for the PC consumer 2 to enter the license key for those products that require a license key to install. After the PC consumer 2, using the browser 16, has selected the check boxes 104a, b, c, d, e for the software components 102a, b, c, d, e in the HTML page 100 to install and entered necessary license keys, then the PC consumer 2 can select the submit button 108 to submit the list including selected software components to install back to the vendor server 18 over the Internet 20. The PC consumer 2 would select to install device drivers 8 for those peripheral devices the PC consumer 2 intends to use with the new computer 22, such as an attached printers, modems, and other devices.

In a further embodiment, the PC consumer 2 can provide the vendor information on the software components to install and any required license keys over the telephone or by submitting via facsimile or mail a written list of software components to install and any necessary license key numbers. The vendor may then enter such information in a customer transaction record maintained in a computer database in the vendor server 18. In still further embodiments, the vendor server 18 may determine the license keys of the software components to install by querying the old computer 4 to determine the license keys 12, 14 from files of the software components to install.

After the vendor obtains information on the software components to install and any necessary license keys, the vendor may then verify (at block 56) the validity of the license numbers for the components to install. For instance, in preferred embodiments, the vendor may have an agreement with different software companies by which they can check the validity of the license keys obtained from the PC consumer 2. The vendor server 18 may include software to directly link to a software company server to check the validity of software license keys provided by the PC consumer 2 after obtaining the returned HTML page 100 filled out by the PC consumer 2. Alternatively, the vendor may require the PC consumer 2 to fax a copy of the software licenses to the vendor.

After determining the validity of all software components that require a license to install and after all information for the selected software components and required license keys are entered in a customer record in the vendor server, the vendor server 18 would then generate (at block 58) an installation report 24. The vendor may provide the PC consumer a confirmation of the installation report 24 for the PC consumer to verify before proceeding with the installation. For instance, if the PC consumer 2 is communicating with the vendor server 18 over the Internet 20 using the browser 16, then the vendor server 18 may transfer the installation report to the PC consumer browser 16, where the PC consumer 2 may select another button to confirm the accuracy of the installation report 24 or to make any desired changes.

After confirming the installation report 24, the vendor would then install (at block 62) the selected software components onto the new computer 22, using any provided license numbers when necessary. The vendor may also install additional software components onto the new computer 22. For instance, if the new computer 22 includes new peripheral devices, then the vendor would install the device drivers for such new peripheral devices. Further, the PC consumer 2 may purchase new application software from the vendor to install on the new computer 22. The new computer 22 with the installed software would then be delivered (at block 64) to the PC consumer 2.

In one set of embodiments, the installation report 24 is a print out listing all selected software components 6, 8, and 10 to install on the new computer 22 and any necessary license keys. A vendor employee would then use the information in the installation report 24 to determine the software components to install and use any of the license keys listed in the report for those components that require license keys.

In further embodiments, the installation report 24 may comprise an electronic record used in a database workflow management system that is forwarded to additional vendor computers for use in installing the software components onto the new computer 22. For instance, the new computer 22 may be connected to a vendor network including vendor installation computers that include the installation files for numerous software components. The vendor computers may then directly install the software components onto the new computer 22 over the network based on the information in the electronic installation report 24, and automatically enter any licensing keys when needed.

To implement the preferred embodiments, the vendor would have to be licensed, authorized or legally allowed to install software components onto new computers 22 on behalf of the PC consumer 2. The vendor may enter into agreements with software companies under which the vendor may install the software components on behalf of the PC consumer 2 or the PC consumer's 2 end user license.

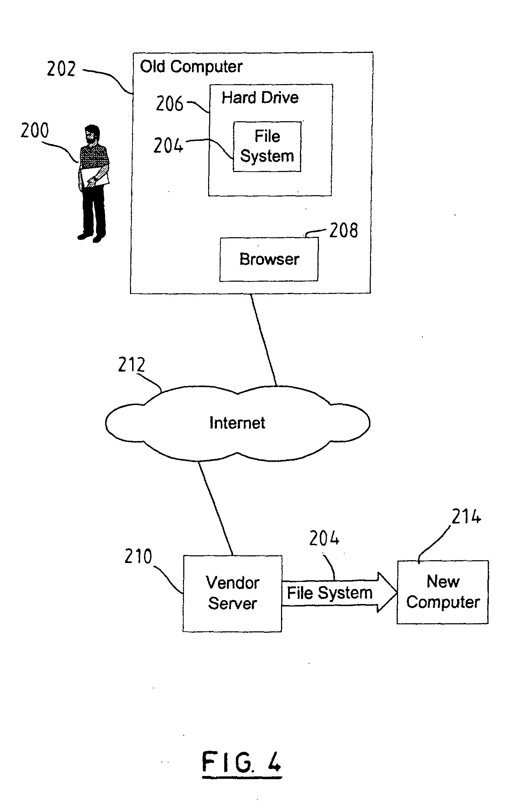

FIG. 4 illustrates an additional arrangement of computer components for an alternative technique for the vendor to reuse the software licensed by the PC consumer. In FIG. 4, a PC consumer 200 owns an old computer 202, including a file system 204 on a hard drive 206 of the old computer 202. The file system 204 would include software components the PC consumer 200 is licensed to use, such as an operating system, application programs, and drivers. The old computer 202 would further include a browser 208 that the PC consumer 200 would use to communicate with the vendor server 210 over the Internet 212. In the embodiment of FIG. 4, the vendor server 18 would download all or part of the file system 204 from the hard drive 206 of the old computer 202, and then copy the file system 204 to the new computer 214.

In this additional embodiments, the vendor would have to ensure that it is legally permissible to copy over all the software components already installed in the file system 204 in the old computer 202 to the new computer. The vendor could include many of the confirmation steps in FIG. 2. For instance, the vendor could allow the PC consumer 200 to select software components to install, and further request any necessary license keys to ensure that the PC consumer 200 is authorized to transfer the software to a new system. Further, if the PC consumer 200 does not select all installed software components installed in the file system 204 to reuse in the new computer 214, then the vendor may only install those selected software components in the new computer 214.

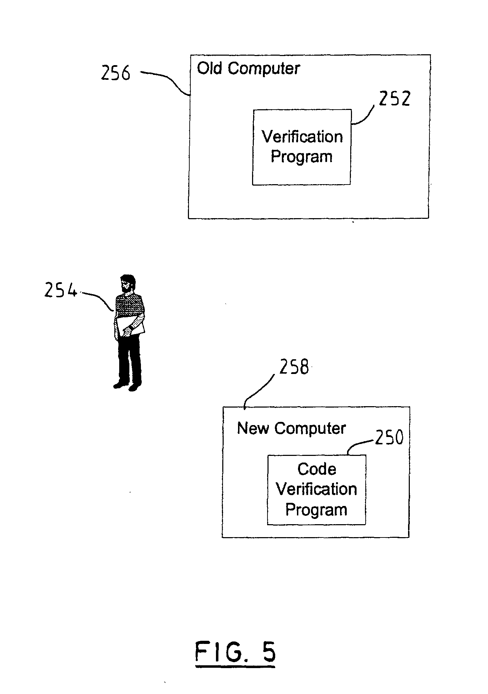

Because in many cases, the PC consumer is only allowed to install their software onto one computer, the vendor may want to take steps to ensure that the PC consumer does not continue to use the software components installed on the new computer in the old computer. Such steps may help avert accusations that the vendor is facilitating unauthorized copying of the software components. FIG. 5 illustrates the use of a code verification program 250 and a verification program 252 the vendor provides to ensure that the PC consumer 254 is not retaining an unauthorized copy of the software components on the old computer 256 after the PC consumer 254 is provided the new computer 258.

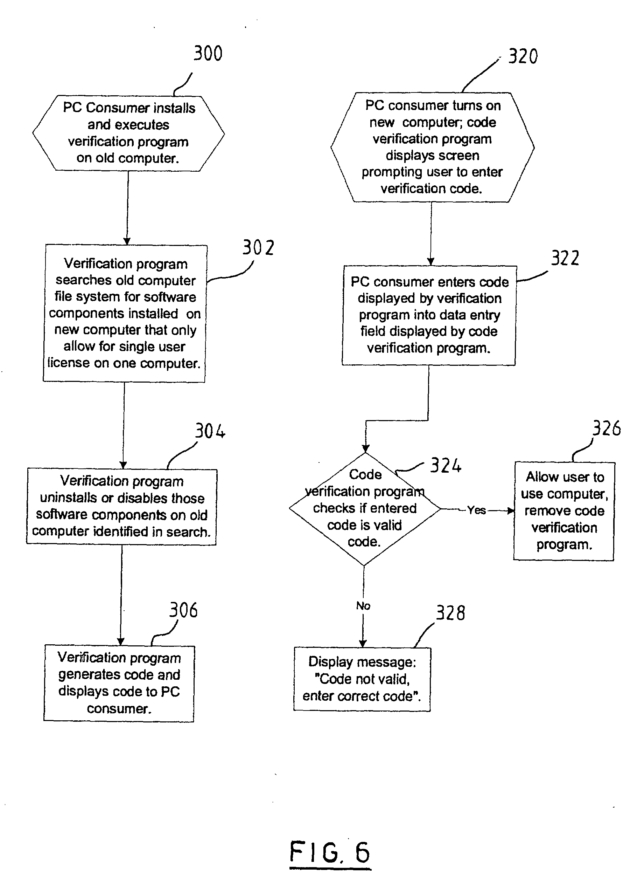

The vendor would install the code verification program 250 on the new computer 258. The code verification program 250 would require the PC consumer 254 to enter a correct code in order to use the new computer 258. FIG. 6 illustrates the operations performed to use the code verification program 250 and the verification program 252 to verify that the user has removed from the old computer 202 the duplicate copy of the software components installed in the new computer 258, according to the installation operations described with respect to FIGs. 1-4. With respect to FIGs. 5 and 6, control begins at block 300 with the PC consumer 254 installing and executing the verification program 252 on the old computer 256. The verification program includes code to perform, upon execution by the PC consumer 254, a search (at block 302) of the old computer 256 file system for software components installed on the new computer 258 that only allow for a single user license on one computer. The vendor may store an electronic installation report, such as installation report 24, on the old computer 256 for the verification program 252 to access. Alternatively, the installation report 24 may be installed with the verification program 252, or downloaded to the old computer 256 over the Internet. Such installation report would include the software components installed on the new computer 258 and information indicating those software components for which the PC consumer 254 only has a single user license.

The verification program 252 then uninstalls or disables (at block 304) those software components on the old computer 256 identified in the search for which the PC consumer 254 only has a single user license. The verification program 252 then generates (at block 306) a code and displays or otherwise presents such code to the PC consumer 254.

The PC consumer (at block 320) would power-on the new computer 258 and, in response, the code verification program 250 would generate a screen prompting the user to enter the verification code displayed by the verification program 252 on the old computer 256. In preferred embodiments, the code verification program 250 would prevent the PC consumer 254, or any other user, from proceeding past the initial prompt, thereby disabling the new computer 258 until a correct code produced by the verification program 252 is entered. At block 322, the PC consumer 254 enters the code displayed by the verification program 252 into a data entry field the code verification program 250 displays with the code prompt. The code verification program 250 (at block 324) would then check if the entered code is a valid code. This checking may be performed by comparing against a list of valid codes or applying an algorithm against the entered code to determine whether it is a valid code. If the code is valid, the code verification program 324 allows (at block 326) the PC consumer 254 to use the computer, i.e., proceed past the code prompt screen, and removes the code verification program 250 from the new computer 258. Otherwise, if the entered code is not valid, then the code verification program 250 displays (at block 328) a message indicating that the code is not valid. In preferred embodiments, after a correct code is entered once, no further verification operations are required. The PC consumer 254 would then install the verification program

In alternative embodiments, the PC consumer may connect the old computer to a network/Internet to allow the vendor server to interrogate the old computer to determine whether the installed program using the license key used to install the licensed programs on the new computer were removed. If such programs were removed from the old computer, then the vendor server would provide the PC consumer a code to use to allow access to the new computer with the installed computer programs. Otherwise, if the code is not provided, then the code verification program would not permit the PC consumer to use the new computer.

The preferred embodiments provide a method, system, and program for a computer hardware vendor to allow a PC consumer to reuse currently licensed programs on the new computer purchased. The PC consumer may avoid the cost associated with the vendor installing a new version or copy of the software the PC consumer already has installed. By allowing PC consumers to reuse licenses for key software, such as the operating system or key application programs, the vendor could sell the PC consumer the hardware without the installed software and substantially reduce the manufacturing cost and retail price of the new computer.

### Alternative Embodiments and Conclusions

The following describes some alternative embodiments for accomplishing the present invention.

The preferred embodiments may be implemented as a method, apparatus or article of manufacture using standard programming and/or engineering techniques to produce software, firmware, hardware, or any combination thereof. The term "article of manufacture" (or alternatively, "computer program product") as used herein is intended to encompass one or more computer programs and data files accessible from one or more computer-readable devices, carriers, or media, such as a magnetic storage media, firmware, programmable logic, memory devices (e.g., EEPROMs, ROMs, PROMs, RAMs, SRAMs, etc.), hardware, electronic devices, a portable storage disk, CD-ROM, a file server providing access to the programs via a network transmission line, holographic unit, etc. Of course, those skilled in the art will recognize that many modifications may be made to this configuration without departing from the scope of the present invention.

In preferred embodiments, the PC consumer and vendor server communicated over the Internet using an Internet protocol such as HTTP. In alternative embodiments, the PC consumer and vendor may communicate over networks other than the network using alternative protocols, such as GNUTELLA or any other file sharing protocol.

In certain implementations, all the steps performed by the vendor in determining software components to install and installing such components may be implemented within the vendor computer system. In further embodiments, certain of the steps involved in determining and installing selected software components may be performed by human interaction between the vendor and the PC consumer in combination with computer processes.

The preferred logic of FIGs. 2 and 6 describes specific operations occurring in a particular order. In alternative embodiments, certain of the logic operations may be performed in a different order, modified or removed and still implement preferred embodiments of the present invention. Morever, steps may be added to the above described logic and still conform to the preferred embodiments. Further, operations described herein may occur sequentially or certain operations may be processed in parallel.

In summary, the present invention provides a method, system, and program used by a computer vendor to install programs onto a purchased computer. A purchase request is received for a computer from a consumer. Consumer indication is received of at least one software program installed on an old computer owned by the consumer to install on the new computer. A determination is made as to whether a license key is needed to install each indicated software program. The license key is received from the consumer for each indicated software program requiring a license key. Each indicated software program is installed onto the new computer and, if necessary, each received license key is used to install each software program requiring the license key. Further, the computer vendor is legally authorized to install the indicated software programs onto the new computer.

The foregoing description of the preferred embodiments of the invention has been presented for the purposes of illustration and description. It is not intended to be exhaustive or to limit the invention to the precise form disclosed. Many modifications and variations are possible in light of the above teaching. It is intended that the scope of the invention be limited not by this detailed description, but rather by the claims appended hereto. The above specification, examples and data provide a complete description of the manufacture and use of the composition of the invention. Since many embodiments of the invention can be made without departing from the spirit and scope of the invention, the invention resides in the claims hereinafter appended.

## Claims

1. A method performed by a computer vendor for installing programs onto a purchased computer, comprising:
receiving a purchase request for a computer from a consumer;
receiving indication of at least one software program installed on an old computer owned by the consumer to install on the new computer;
determining a license key for each indicated software program requiring a license key to install the software program; and
installing each indicated software program onto the new computer, wherein each received license key is used to install each software program requiring the license key, wherein the computer vendor is legally authorized to install the indicated software programs onto the new computer.

2. The method of claim 1, wherein determining the license key comprises:
receiving the license key from the consumer for each indicated software program requiring a license key to install; and

3. The method of claim 1, wherein determining the license key comprises:
accessing information in the software program installed on the old computer to determine the license key from files of the installed software program.

4. The method of claim 1, wherein receiving indication of at least one software program to install on the new computer further comprises a vendor computer system performing:
electronically querying the old computer over a network to determine software programs installed on the old computer;
transmitting to a consumer browser over the Internet an electronic form including the determined software programs with selectable fields to allow the consumer to select in the electronic form determined software programs to install on the new computer; and
receiving the electronic form transmitted from the consumer browser over the network, wherein the information in the selected fields is used to determine the indicated software programs to install on the new computer.

5. The method of claim 4, wherein the electronic form includes a data entry field for the consumer to enter the license key for each selected software program requiring a license key to install, wherein receiving the license key from the consumer comprises receiving the license keys entered in the data entry field of the electronic form.

6. The method of claim 5, wherein the vendor computer system further performs:
generating an installation report from the information in the received electronic form indicating software programs to install on the new computer and the license key for any software programs requiring a license key.

7. The method of claim 6, wherein the installation report comprises an electronic installation report that is transmitted through a workflow environment, and wherein the vendor computer system uses the installation report to control the installation of the indicated software programs on the new computer.

8. The method of claim 1, wherein installing each indicated software program onto the new computer further comprises the vendor computer system performing:
downloading the file directories from the old computer including each indicated software program over a network Internet, wherein the old computer and vendor computer system are capable of communicating over a network; and
copying the downloaded file directories to the new computer to make the software programs included in the copied file directories available for use on the new computer.

9. The method of claim 1, wherein determining whether a license key is needed to install one indicated software program is performed by the vendor computer system querying the old computer of the consumer over a network.

10. A method for installing programs onto a first computer that were previously installed on a second computer, comprising:
installing software programs onto the first computer that were previously installed on the second computer, wherein the installed software programs are capable of requiring a license key to complete installation; and
executing a computer program on the second computer to verify whether each software program installed on the first computer is removed from the second computer when a license for the installed software program does not permit two copies of the software program to be concurrently installed on different computers.

11. The method of claim 10, wherein a computer program installed on the first computer blocks access to functions of the first computer until a code is entered indicating that the second computer is verified to not include software programs having the license not allowing the software program to be concurrently installed on the first computer and the second computer.

12. The method of claim 10, wherein the computer program executing on the second computer further performs:
disabling those software programs installed on the first computer when the license only permits one copy on one computer; and
generating a code after all the software programs that cannot be concurrently maintained on both the first and second computers are disabled, wherein the code indicates that the second computer is verified.

13. A computer vendor system for installing programs onto a purchased computer, comprising:
means for receiving a purchase request for a computer from a consumer;
means for receiving indication of at least one software program installed on an old computer owned by the consumer to install on the new computer;
means for determining a license key for each indicated software program requiring a license key to install the software program; and
means for installing each indicated software program onto the new computer, wherein each received license key is used to install each software program requiring the license key, wherein the computer vendor is legally authorized to install the indicated software programs onto the new computer.

14. A system for installing programs onto a first computer that were previously installed on a second computer, comprising:
means for installing software programs onto the first computer that were previously installed on the second computer, wherein the installed software programs are capable of requiring a license key to complete installation; and
means for verifying whether each software program installed on the first computer is removed from the second computer when a license for the installed software program does not permit two copies of the software program to be concurrently installed on different computers.

15. An article of manufacture for installing programs onto a purchased computer, wherein the article of manufacture comprises at least one computer program that is capable of causing a computer vendor computer system to perform:
receiving a purchase request for a computer from a consumer;
receiving indication of at least one software program installed on an old computer owned by the consumer to install on the new computer;
determining a license key for each indicated software program requiring a license key to install the software program; and
installing each indicated software program onto the new computer, wherein each received license key is used to install each software program requiring the license key, wherein the computer vendor is legally authorized to install the indicated software programs onto the new computer.

16. An article of manufacture for installing programs onto a first computer that were previously installed on a second computer, wherein the article of manufacture includes at least one program installed on the second computer that is capable of causing the second computer to perform:
receiving information on an installation of software programs onto the first computer that were previously installed on the second computer, wherein the installed software programs are capable of requiring a license key to complete installation; and
verifying whether each software program installed on the first computer is removed from the second computer when a license for the installed software program does not permit two copies of the software program to be concurrently installed on different computers.
